# EUROPÄISCHE PATENTSCHRIFT

(11) **EP 2 642 213 B1**
(45) Veröffentlichungstag und Bekanntmachung des Hinweises auf die Patenterteilung: **15.08.2018**
(21) Anmeldenummer: 13159856.7
(22) Anmeldetag: 19.03.2013
(51) Int. Cl.: F24F 11/00, F24F 11/30, F24F 110/10, F24F 110/70, F24F 11/70, F24F 110/20

(54) **Verfahren zur Steuerung eines Lüftungssystems mindestens eines Raums sowie entsprechendes Lüftungssystem**
Method for controlling a ventilation system of at least one room and corresponding ventilation system
Procédé de commande d'un système de ventilation d'au moins une pièce et système de ventilation correspondant

(30) Priorität: 21.03.2012 DE 102012102377
(43) Veröffentlichungstag der Anmeldung: 25.09.2013
(73) Patentinhaber: REHAU AG + Co, 95111 Rehau (DE)
(72) Erfinder: Schindler, Kaspar, 5726 Unterkulm (CH); Szymanski, Mark, 3372 Wangwil (CH)

(56) Entgegenhaltungen:
- EP-A1- 1 795 691
- WO-A1-2012/025122
- DE-A1- 10 122 435
- DE-A1- 19 534 842
- DE-A1- 19 719 232
- DE-A1- 19 834 275
- DE-A1- 19 855 056
- DE-A1-102006 032 858

## Beschreibung

Die vorliegende Erfindung betrifft ein Verfahren zur Steuerung eines Lüftungssystems mindestens eines Raums sowie ein Lüftungssystem, das zur Durchführung eines derartigen Verfahrens ausgelegt ist.

Derartige Lüftungssysteme sind aus dem Stand der Technik, beispielsweise aus der DE 101 22 435 A1 und der DE 10 2006 032 858 A1 bekannt. Die in diesen Dokumenten beschriebenen Verfahren zur Lüftungssteuerung beschreiben derartige Steuerungsverfahren, die die Lüftung der mittels der Verfahren gesteuerten Lüftungselemente in Abhängigkeit von meteorologischen Daten wie Luftfeuchtigkeit, Temperatur, Luftdruck und dergleichen steuern. Dabei sind diese Verfahren sowohl auf das Erzeugen eines angenehmen Raumklimas als auch auf einen energiesparenden Betrieb des jeweiligen Lüftungssystems ausgerichtet. WO-A-2012/025122 beschreibt ein Verfahren und eine Vorrichtung zur Steuerung eines Lüftungssystems gemäß dem Oberbegriff der Ansprüche 1 bzw. 10. Vor diesem Hintergrund liegt der vorliegenden Erfindung die Aufgabe zugrunde, die aus dem Stand der Technik bekannten Verfahren zur Steuerung von Lüftungssystemen weiterzubilden. Insbesondere soll das Lüftungssystem durch das erfindungsgemäße Verfahren in energiesparender Weise betrieben werden können. Darüber hinaus sollen durch das erfindungsgemäße Verfahren für den Benutzer angenehme Bedingungen in den durch das Lüftungssystem belüfteten Räumen erzeugt werden können.

Diese und andere Aufgaben werden durch ein Verfahren zur Steuerung eines Lüftungssystems mindestens eines Raums mit den Merkmalen des Anspruchs 1 bzw. ein Lüftungssystem mit den Merkmalen des Anspruchs 10. Bevorzugte Ausführungsformen des erfindungsgemäßen Verfahrenssind in den abhängigen Ansprüchen beschrieben.

Gemäß der vorliegenden Erfindung wurde erkannt, dass bei einem Lüftungssystem mit mehreren Lüftungselementen eine signifikante Energieeinsparung dadurch erzielt werden kann, dass den jeweiligen Lüftungselementen jeweils ein Sensor zur Messung der Außentemperatur zugeordnet ist und in der Nähe des zugeordneten Lüftungselements angeordnet ist und eine Regelungseinheit des Lüftungssystems, die mit den Lüftungselementen in Kommunikation (beispielsweise über eine Funkverbindung, das Stromnetz, eine Bus-Verbindung und dergleichen) steht, demjenigen Lüftungselement, dessen zugeordneter Sensor zur Messung der Außentemperatur eine für die durch den Lüftungsvorgang zu erzielende Temperaturänderung in dem Raum günstige Außentemperatur misst, einen höheren Anteil an der Gesamtlüftungsleistung übernehmen lässt als die anderen Lüftungselemente. Dies kann beispielsweise dann der Fall sein, wenn einzelnen Außenwandbereichen des zu belüftenden Raums bzw. der zu belüftenden Räume verschieden starke Sonneneinstrahlungen zukommen, beispielsweise liegt eine Wand des zu belüftenden Raums im Schatten, während eine andere Außenwand der vollen Sonneneinstrahlung ausgesetzt ist. In den Wintermonaten, in denen möglichst wenig Energie nach außen abgegeben werden soll, wird dann eine Lüftung bevorzugt mit demjenigen Lüftungselement vorgenommen, in dessen Nähe eine höhere Außentemperatur gemessen wird. Im Gegensatz dazu wird in den Sommermonaten, in denen dem Rauminneren möglichst kalte Luft zugeführt werden soll, bevorzugt mittels der Lüftungselemente gelüftet werden, in deren Nähe eine niedrige Außentemperatur gemessen wird.

Dementsprechend stellt die vorliegende Erfindung ein Verfahren zur Steuerung eines Lüftungssystems mindestens eines Raums zur Verfügung, wobei das Lüftungssystem zwei oder mehr Lüftungselemente, mindestens eine Regelungseinheit, mindestens einen Sensor zur Messung der Innentemperatur sowie Sensoren zur Messung der Außentemperatur umfasst, wobei die Lüftungselemente und die Sensoren mit der Regelungseinheit in Kommunikation stehen, sowie dem Lüftungselement jeweils ein Sensor zur Messung der Außentemperatur zugeordnet ist und die Sensoren zur Messung der Außentemperatur, die die Außentemperatur messen, die jeweils in der Nähe des zugeordneten Lüftungselements vorherrscht, wobei die Regelungseinheit in Abhängigkeit von den gemessenen Außentemperaturen denjenigen Lüftungselementen, deren zugeordnete Sensoren zur Messung der Außentemperatur eine für die durch den Lüftungsvorgang zu erzielende Temperaturänderung in dem mindestens einen Raum günstige Außentemperatur messen, einen Betrieb mit erhöhter Leistung gegenüber den anderen Lüftungselementen vorgibt. Darüber hinaus bezieht sich die vorliegende Erfindung auf ein Lüftungssystem, das zur Durchführung eines erfindungsgemäßen Verfahrens zur Steuerung eines Lüftungssystems ausgelegt ist.

Dabei kann es bevorzugt sein, wenn die Regelungseinheit eine Datumsfunktion aufweist und eine Entscheidung, welchem Lüftungselement bzw. welchen Lüftungselementen durch die Regelungseinheit eine erhöhte Leistung vorgeschrieben wird, in Abhängigkeit von der gerade herrschenden Jahreszeit erfolgt. Auf diese Weise kann die Regelungseinheit selbständig und ohne Vornehmen einer Einstellungsänderung durch den Benutzer eine entsprechende Entscheidung treffen, an welchen Lüftungselementen des Lüftungssystems für den gegenwärtigen oder anstehenden Lüftungsvorgang günstige Außentemperaturen vorliegen.

Es kann auch hilfreich sein, wenn das Lüftungssystem weiter mindestens einen mit der Regelungseinheit in Kommunikation stehenden Sensor zur Messung des CO₂-Gehaltes umfasst und die Regelungseinheit bei Überschreiten eines in der Regelungseinheit festgelegten CO₂-Höchstgehaltes den Lüftungselementen einen Lüftungsbetrieb vorgibt, bis ein in der Regelungseinheit ebenfalls festgelegter unterer CO₂-Schwellenwert unterschritten ist. Dabei kann der CO₂-Höchstwert beispielsweise 2000 ppm CO₂ oder 1500 ppm CO₂ oder 1000 ppm CO₂ betragen, während der untere CO₂-Schwellenwert beispielsweise 1000 ppm CO₂ oder 750 ppm CO₂ oder 400 ppm CO₂ betragen kann. In diesem Zusammenhang ist es bevorzugt, wenn der CO₂-Höchstwert und/oder der CO₂-Schwellenwert an der Regelungseinheit des Lüftungssystems eingestellt werden können. Die Regelungseinheit ist dazu eingerichtet, fortlaufend oder in Intervallen den gemessenen CO₂-Gehalt mit dem CO₂-Höchstgehalt und dem unteren CO₂-Schwellenwert zu vergleichen und in Abhängigkeit des Vergleichsergebnisses ein Signal zum Warten, Weiterlaufen lassen oder Abbrechen des Lüftungsvorgangs an die zugeordneten Lüftungselemente auszugeben.

Darüber hinaus kann es von Vorteil sein, wenn das Lüftungssystem weiter mindestens einen mit der Regelungseinheit in Kommunikation stehenden Sensor zur Messung der relativen Innenluftfeuchtigkeit umfasst und die Regelungseinheit bei Überschreiten eines in der Regelungseinheit festgelegten Maximalwertes der relativen Innenluftfeuchtigkeit den Lüftungselementen einen Lüftungsbetrieb vorgibt, bis ein in der Regelungseinheit festgelegter unterer Schwellenwert der relativen Innenluftfeuchtigkeit unterschritten ist. Eine derartige Steuerung der Lüftung über die Luftfeuchtigkeit in dem Raum ist vor allem in Badezimmern und sonstigen Räumen von hoher Bedeutung, in denen eine rrhöhte Gefahr eines Schimmelbefalls besteht (insbesondere in Nassräumen wie Badezimmer, Waschküche und dergleichen). Dabei können der Maximalwert und/oder der untere Schwellenwert der absoluten Innenluftfeuchtigkeit durch den Benutzer an der Regelungseinheit eingestellt werden. Dabei ist es bevorzugt, wenn der Höchstwert der relativen Innenluftfeuchtigkeit 80 % beträgt und der untere Schwellenwert der relativen Innenluftfeuchtigkeit beispielsweise 40, 50 oder 60 % beträgt.

In diesem Zusammenhang ist es besonders bevorzugt, wenn das Lüftungssystem weiter mindestens einen mit der Regelungseinheit in Kommunikation stehenden Sensor zur Messung der absoluten Außenluftfeuchtigkeit umfasst und die Regelungseinheit einen Betrieb der Lüftungselemente verhindert, wenn die absolute Außenluftfeuchtigkeit einen Wert aufweist, der kein Absenken der relativen Innenluftfeuchtigkeit erlaubt. Die Regelungseinheit ermittelt dann aus der gemessenen relativen Innenluftfeuchtigkeit und der gemessenen Innentemperatur die absolute Innenluftfeuchtigkeit und vergleicht diese mit der absoluten Außenluftfeuchtigkeit. Wenn dann eine Verringerung der relativen Innenluftfeuchtigkeit durch den Lüftungsvorgang nicht erzielt werden kann, bricht die Regelungseinrichtung den Betrieb der Lüftungselemente ab bzw. veranlasst kein Starten der Lüftungselemente. Dadurch wird zum einen eine weitere Zunahme der relativen Innenluftfeuchtigkeit durch den Lüftungsprozess verhindert. Darüber hinaus wird ein unnötiger Lüftungsvorgang nicht vorgenommen bzw. abgebrochen, was zur Energieeinsparung beiträgt.

Es kann auch von Vorteil sein, wenn die Lüftungselemente eine Überwachung ihrer Funktion übernehmen, bei Auftreten einer Fehlfunktion des Lüftungselements das Ergebnis der Überwachung an die Regelungseinheit übermittelt wird und die Regelungseinheit dem entsprechenden Lüftungselement ein Signal zur Anpassung des Betriebs dieses Lüftungselements übermittelt. Auf diese Weise wird der Benutzer auf Störungen des Lüftungssystems wie beispielsweise Filterverstopfung, ungünstige Druckverhältnisse zwischen Innenraum und außen, Fehlfunktion der Lüfter und dergleichen hingewiesen. Darüber hinaus trägt das Verhindern eines Betriebs von Lüftungselementen, durch die gegenwärtig kein oder nur ein schlechtes Lüftungsergebnis erzielt wird, zu einer weiteren Energieeinsparung bei.

Es kann auch hilfreich sein, wenn das Verfahren ein Lüftungssystem für mehrere Räume steuert, denen jeweils mindestens ein Lüftungselement zugeordnet ist, wobei die Regelungseinheit dem dem jeweiligen Raum zugeordneten Lüftungselement/dem den jeweiligen Raum zugeordneten Lüftungselementen ein für den jeweiligen Raum spezifisches Lüftungsverhalten vorgibt. Dieses raumspezifische Lüftungsverhalten ist vorzugsweise in der Regelungseinheit vorprogrammiert. So können beispielsweise auch spezielle Raumarten wie normales Zimmer (beispielsweise Wohnzimmer, Arbeitszimmer und dergleichen), Schlafzimmer (Elternschlafzimmer, Kinderzimmer und dergleichen), Küche und Nassraum (beispielsweise Bad, Toilette, Waschküche und dergleichen) vorgegeben sein. Bei dem Raumtyp Schlafzimmer bzw. Kinderzimmer können beispielsweise Geräuschemissionen während der Nachtstunden vermieden werden, das heißt, die diesen Räumen zugeordneten Lüftungselemente werden in den Nachtstunden nicht mit der vollen Lüfterleistung betrieben. Im Gegensatz dazu können dem Programmtyp "normales Zimmer" zugewiesene Räume insbesondere während der Nacht mit hoher Lüftungsleistung gelüftet werden. Bei den dem Programmtyp "Nassraum" zugewiesenen Raumtypen ist es möglich, der Lüftung auf Basis der gemessenen Luftfeuchtigkeitswerte Priorität zu verleihen. Dadurch ist es gewährleistet, dass das erfindungsgemäße Verfahren zu einem angenehmen Raumklima in den jeweiligen Räumen beiträgt.

Darüber hinaus kann es hilfreich sein, wenn das Verfahren ein Lüftungssystem für mehrere Räume steuert, denen jeweils eine Regelungseinheit und mindestens ein Lüftungselement zugeordnet ist, wobei die Regelungseinheiten der einzelnen Räume miteinander in Kommunikation stehen und eine durch den Benutzer an einer Regelungseinheit vorgenommene Einstellungsänderung von dieser Regelungseinheit an die anderen Regelungseinheiten übermittelt wird, die dem ihnen zugeordneten Lüftungselement/den ihnen zugeordneten Lüftungselementen ein der entsprechend der vorgenommenen Einstellungsänderung geändertes Lüftungsverhalten vorgeben. Dadurch kann der Benutzer beispielsweise bei Verlassen der durch die Lüftungseinheit belüfteten Räume das Lüftungssystem abstellen oder in einen reduzierten Betrieb schalten, wenn er das Haus verlässt. Dabei ist es dann ausreichend, wenn er diese Änderung an einer Regelungseinheit vornimmt.

Es kann sich auch als günstig erweisen, wenn die Lüftungselemente und/oder die Sensoren zur Messung der Außentemperatur und/oder den Sensoren zur Messung der Außenluftfeuchtigkeit jeweils in einem oder mehreren Fensterrahmen, insbesondere in einem oder mehreren Blendrahmen angeordnet sind. Auf diese Weise ist die Nähe zwischen den Sensoren zur Messung der Außenluftfeuchtigkeit und den ihnen zugeordneten Lüftungselementen gewährleistet. Dabei ist es bevorzugt, wenn in einem Fensterrahmen mehrere Lüftungselemente, insbesondere zwei oder vier Lüftungselemente, angeordnet sind. Ein bevorzugtes Lüftungselement ist in der DE 20 2011 051 360 U1 beschrieben. Auf die Offenbarung dieses Dokuments hinsichtlich der Merkmale des bevorzugten Lüftungselements und dessen Anordnung und Einbau in einem Fenster, insbesondere in einem Blendrahmen aus einem Kunststoff-Hohlkammerprofil wird hiermit explizit Bezug genommen.

Nachstehend wird die vorliegende Erfindung unter Bezugnahme auf bevorzugte Ausführungsformen des erfindungsgemäßen Steuerungsverfahrens im Detail erläutert. In den Figuren zeigen
- Fig 1: eine schematische Darstellung eines Raums, der durch ein durch eine Ausführungsform des erfindungsgemäßes Verfahrens gesteuertes Lüftungssystem belüftet werden kann;
- Fig. 2: eine schematische Darstellung von vier Räumen, die durch ein durch eine weitere Ausführungsform des erfindungsgemäßen Verfahrens gesteuertes Lüftungssystem belüftet werden können; und
- Fig. 3: eine schematische Darstellung von vier Räumen, die durch ein durch eine weitere Ausführungsform des erfindungsgemäßes Verfahrens gesteuertes Lüftungssystem belüftet werden können.

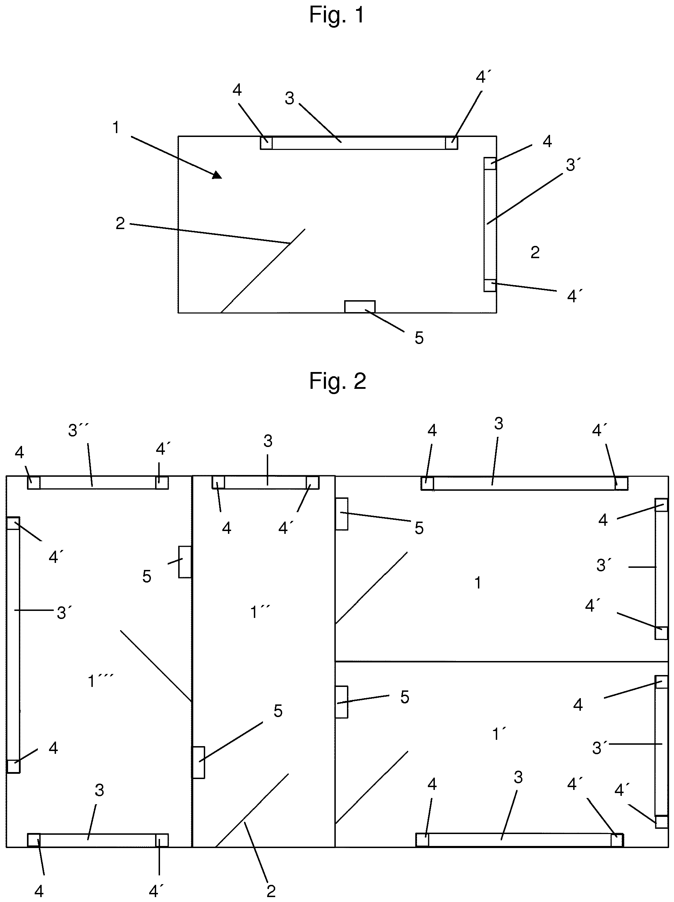

Fig. 1 zeigt einen Raum 1, der durch ein durch eine Ausführungsform des erfindungsgemäßen Verfahrens gesteuertes Lüftungssystem belüftet werden kann, in einer schematischen Draufsicht. Der Raum 1 hat einen etwa rechtwinkligen Querschnitt und ist über eine Tür 2 zugänglich. An zwei aneinandergrenzenden Wänden des Raums 1 befinden sich jeweils ein Fenster 3, 3'. In den Blendrahmen der beiden Fenster 3, 3' sind jeweils zwei Lüftungselemente 4, 4' aufgenommen. In alternativen Ausführungsformen kann in jedem Fenster auch nur ein Lüftungselement 4, 4' aufgenommen sein. Alternativ dazu können auch drei, vier oder mehr Lüftungselemente 4, 4' in einem Blendrahmen eines Fensters 3, 3' aufgenommen sein. Ebenso ist es möglich, dass in den Fenstern 3, 3' des Raums 1 eine verschiedene Anzahl an Lüftungselementen 4, 4' aufgenommen ist.

Zur Aufnahme in einen Blendrahmen der Fenster 3, 3' geeignete Lüftungselemente 4, 4' sind in der DE 20 2011 058 360 U1 beschrieben. Der Blendrahmen der Fenster 3, 3' weist eine zum Inneren des Raums 1 gerichtete Lüftungsöffnung und eine nach außen gerichtete Lüftungsöffnung auf. Die beiden Lüftungsöffnungen sind dabei über einen Lüftungskanal miteinander verbunden. Wird ein Blendrahmen aus einem Hohlprofil, insbesondere einem Kunststoff-Hohlprofil verwendet, wird vorzugsweise die Hauptkammer des Hohlprofils als Lüftungskanal eingesetzt. Vorzugsweise etwa in der Mitte zwischen den beiden Lüftungsöffnungen ist im Blendrahmen der Fenster 3, 3' auf zwei einander gegenüber liegenden Seiten des Fensters 3, 3' jeweils ein Lüftungselement 4, 4' angeordnet. Die Lüftungselemente 4, 4' umfassen jeweils ein Lüftungsgehäuse, einen Radiallüfter und ein drehbares Trennelement, durch das der Lüftungskanal in einen Innenabschnitt, der mit der zum Innenraum gerichteten Lüftungsöffnung verbunden ist, und einen Außenabschnitt, der mit der zur Außenseite gerichteten Lüftungsöffnung verbunden ist, unterteilt ist. In einer ersten Drehstellung des Trennelements ist der Radiallüfter derart angeordnet, dass die Strömungsrichtung im Lüftungskanal vom Innenabschnitt zum Außenabschnitt weist, während der Radiallüfter in einer zweiten Drehstellung des Trennelements derart angeordnet ist, dass die Strömungsrichtung im Lüftungskanal vom Außenabschnitt zum Innenabschnitt weist. Im Bereich des Lüftungskanals ist vorzugsweise mindestens ein Wärmetauscher, insbesondere ein Gegenstrom-Wärmetauscher oder ein Wärmerekuperator angeordnet. Der Wärmetauscher ist vorzugsweise zwischen der zum Innenraum gerichteten Lüftungsöffnung und dem Lüftungselement im Lüftungskanal angeordnet.

Darüber hinaus umfasst jedes Lüftungselement einen eigenen Mikroprozessor und eine Leiterplatte, in der entsprechende Informationen für die Steuerung des jeweiligen Lüftungselements 4, 4' gespeichert sind. Über eine vorzugsweise an einer Wand des Raums 1 angeordnete Regelungseinheit 5, in der ein Sensor zur Messung der Innentemperatur aufgenommen ist, erhält die Leiterplatte des jeweiligen Lüftungselements 4, 4' von der Regelungseinheit 5 Befehle hinsichtlich Lüftungsleistung bzw. Lüftungsintensität, Wechselintervall und dergleichen. Der eingehende Befehl wird im Mikroprozessor verarbeitet und der Motor des Radiallüfters sowie ein Antrieb zum Betätigen des drehbaren Trennelements angesteuert. Der Radiallüfter seinerseits übermittelt ein Leistungssignal, beispielsweise die Drehgeschwindigkeit des Radiallüfters zurück an den jeweiligen Mikroprozessor. Dieses Signal wird wiederum vom Mikroprozessor verarbeitet, der entsprechende Befehle an den Radiallüfter gibt, beispielsweise dessen Drehzahl reguliert, und auf diese Weise die einwandfreie Funktion des Lüftungselements überprüft. Ist die einwandfreie Funktion des Lüftungselements 4, 4' nicht gewährleistet, wird ein entsprechendes Signal an die Regelungseinheit 5 übermittelt, auf der die Fehlfunktion des entsprechenden Lüftungselements 4, 4' angezeigt wird und die dann ein Signal zum Stoppen des Radiallüfters des entsprechenden Lüftungselements 4, 4' sendet. Die Verbindung zwischen der Regelungseinheit 5 und den in den Fenstern 3, 3' aufgenommenen Lüftungselementen 4, 4' erfolgt vorzugsweise über eine Bus-Verbindung. Bei einer derartigen Bus-Verbindung sind vorzugsweise die Lüftungselemente 4, 4', die in einem der Fenster 3, 3' aufgenommen sind, miteinander über zwei Kabelverbindungen verknüpft, während eine der Lüftungselemente 4, 4' eines Fensters 3, 3' mit der Regelungseinheit 5 ebenfalls über zwei Kabel verbunden ist. Damit steuert die Regelungseinheit 5 die beiden Lüftungselemente 4, 4' jedes der beiden Fenster 3, 3'. Ebenso ist es möglich, dass eine Regelungseinheit 5 alle Lüftungselemente 4, 4' einer Etage oder auch des gesamten Gebäudes steuert. Es ist jedoch bevorzugt, dass eine Regelungseinheit 5 sämtliche Lüftungselemente 4, 4' eines Raums 1 steuert.

In der Nähe jedes Lüftungselements 4, 4' ist ein Sensor zur Messung der Außentemperatur sowie ein Sensor zur Messung der absoluten Außenluftfeuchtigkeit angeordnet. Die Sensoren stehen jeweils in Kommunikation mit den dem betreffenden Lüftungselement 4, 4' zugeordneten Leiterplatten. Ebenso ist es möglich, dass nur ein Lüftungselement 4, 4' jedes Fensters 3, 3' über einen Sensor zur Messung der Innentemperatur und einen Sensor zur Messung der absoluten Außenluftfeuchtigkeit verfügt. Diese Sensoren sind ebenfalls mit der Leiterplatte des betreffenden Lüftungselements 4, 4' verbunden. Alternativ ist es auch möglich, dass ein Lüftungselement 4, 4' eines Fensters 3, 3' einen Sensor zur Messung der Innentemperatur aufweist, der mit der Leiterplatte des jeweiligen Lüftungselements 4, 4' verbunden ist, und ein anderes Lüftungselement 4, 4' einen Sensor zur Messung der absoluten Außenluftfeuchtigkeit aufweist, der mit der Leiterplatte des betreffenden Lüftungselements 4, 4' in Verbindung steht.

Die Fenster 3, 3' des Raums 1 sind in zwei aneinander angrenzenden, winklig verbundenen Wänden des Raums 1 angeordnet. Dadurch sind die beiden Fenster 3, 3' im Tagesverlauf einer unterschiedlichen Sonneneinstrahlung ausgesetzt. Je nach Ausrichtung der jeweiligen Fenster 3, 3' wird die Außenluft im Bereich der Fenster unterschiedlich aufgeheizt. Ist beispielsweise das Fenster 3' nach Süden ausgerichtet, wird die Außentemperatur in der Nähe des Fensters 3' höher sein als die Temperatur der Außenluft in der Nähe des Fensters 3, das dann nach Osten ausgerichtet wäre. Diese Information über die in der Nähe der jeweiligen Lüftungselemente 4, 4' der Fenster 3, 3' vorherrschenden Außentemperaturen werden an die Regelungseinheit 5 übermittelt. Die Regelungseinheit 5 wird dann denjenigen Lüftungselementen 4, 4', deren zugeordnete Sensoren zur Messung der Außentemperatur eine für die durch den Lüftungsvorgang zu erzielende Temperaturänderung in dem mindestens einen Raum 1 günstige Außentemperatur messen, einen Betrieb mit erhöhter Leistung gegenüber den anderen Lüftungselementen 3, 3' vorgeben. In den Sommermonaten, in denen durch den Lüftungsvorgang eine Abkühlung der Luft in dem Raum 1 vorgenommen werden soll, wird daher von der Regelungseinheit 5 ein Signal an die Lüftungselemente 4, 4' des Fensters 3 zu einer höheren Lüftungsleistung übermittelt, während die Regelungseinheit 5 an die Lüftungselemente 4, 4' des Fensters 3' ein Signal zum Betrieb mit geringerer Lüftungsleistung übermittelt. Über die Leiterplatten und die Mikroprozessoren der einzelnen Lüftungselemente 4, 4' werden diese Signale an den Mikroprozessor der jeweiligen Lüftungselemente 4, 4' übermittelt, die diese an die entsprechenden Radiallüfter übermitteln, durch die die von der Regelungseinheit 5 gegebenen Befehle umgesetzt werden.

Für den Fall, dass durch den Lüftungsvorgang in dem Raum 1 möglichst keine Temperaturänderung oder eine Temperaturerhöhung erfolgen soll, übermittelt die Regelungseinheit 5 an die Lüftungselemente 4, 4' des Fensters 3' eine entsprechende Anweisung, den Radiallüfter dieser Lüftungselemente 4, 4' des Fensters 3' mit höherer Lüftungsleistung gegenüber den Lüftungselementen 4, 4' des Fensters 3 zu betreiben. Diese Anweisungen werden durch die Radiallüfter entsprechend umgesetzt. Es ist möglich, dass der Benutzer des Lüftungssystems über die Regelungseinheit vorgibt, ob durch den Lüftungsvorgang eine Abkühlung der Luft in dem Raum 1 erfolgen soll oder ob möglichst keine Temperaturerniedrigung der Luft in dem Raum 1 durch den Lüftungsvorgang erfolgen soll. Es ist jedoch bevorzugt, dass die Regelungseinheit 5 über eine Datumsfunktion verfügt. Das Datum kann bei der Installation des Lüftungssystems dann einmalig in die Regelungseinheit 5 eingegeben werden. Danach verfügt die Regelungseinheit 5 über ein Programm, das in der gerade vorherrschenden Jahreszeit den Lüftungselementen 4, 4' der Fenster 3, 3' ein entsprechendes Leistungsverhalten der Lüftungselemente 4, 4' der Fenster 3, 3' vorgibt.

Darüber hinaus ist in dem Raum 1, vorzugsweise in der Regelungseinheit 5, ein Sensor zur Messung des CO₂-Gehaltes im Raum 1 angeordnet, der mit der Regelungseinheit 5 in Verbindung steht, vorzugsweise auch in dieser angeordnet ist. Bei Überschreiten eines in der Regelungseinheit 5 festgelegten CO₂-Höchstgehaltes bzw. CO₂-Höchstwertes, der beispielsweise 2000 ppm CO₂ oder 1500 ppm CO₂ betragen kann, übermittelt die Regelungseinheit 5 an die Lüftungselemente 4, 4' der Fenster 3, 3' ein Signal zum Starten der Radiallüfter. Diese Signale werden entsprechend umgesetzt und ein Lüften vorgenommen. Der CO₂-Sensor misst kontinuierlich oder in festgelegten Intervallen den CO₂-Gehalt der Luft im Raum. Wird ein ebenfalls in der Regelungseinheit 5 festgelegter unterer CO₂-Schwellenwert, der beispielsweise 1000 ppm CO₂ oder 750 ppm CO₂ oder 400 ppm CO₂ betragen kann, unterschritten, übermittelt die Regelungseinheit 5 ein Signal an die Lüftungselemente 4, 4' der Fenster 3, 3', durch das der Lüftungsvorgang beendet oder abgeschwächt wird. Dabei ist es möglich, dass die Steuerung des Lüftungssystems über den CO₂-Gehalt in der Luft die entsprechende Steuerung, die auf der Messung der Temperaturdifferenzen zwischen außerhalb und innerhalb des Raums 1 beruht, überwiegt. Alternativ dazu kann auch die auf den Temperaturmessungen beruhende Lüftungssteuerung eine höhere Priorität gegenüber der auf Basis von CO₂-Messung beruhenden Steuerung besitzen.

Darüber beinhaltet das durch das erfindungsgemäße Verfahren gesteuerte Lüftungssystem des Raums 1 einen im Raum 1 angeordneten Sensor zur Messung der relativen Luftfeuchtigkeit der Luft im Inneren des Raums 1. Dieser Sensor zur Messung der relativen Luftfeuchtigkeit der Innenluft des Raums 1 steht in Kommunikationsverbindung mit der Regelungseinheit 5 und ist vorzugsweise in der Regelungseinheit 5 integriert. Überschreitet die gemessene relative Luftfeuchtigkeit der Innenluft des Raums nun einen in der Regelungseinheit 5 festgelegten Höchstwert der relativen Innenluftfeuchtigkeit, der beispielsweise 80 % oder 70 % betragen kann, übermittelt die Regelungseinheit 5 an die Lüftungselemente 4, 4' der einzelnen Fenster 3, 3' ein Signal zum Starten eines Lüftungsvorgangs, der über die Leiterplatte und den Mikroprozessor der jeweiligen Lüftungselemente 4, 4' an die entsprechenden Radiallüfter weitergegeben wird. Während des Lüftungsvorgangs misst der Sensor zur Messung der relativen Innenluftfeuchtigkeit kontinuierlich oder in Intervallen die relative Feuchtigkeit der Innenluft des Raums 1. Wird bei dieser Messung ein unterer Schwellenwert der relativen Innenluftfeuchtigkeit, der ebenfalls in der Regelungseinheit 5 festgelegt ist und beispielsweise 40 %, 50 % oder 60 % relative Luftfeuchtigkeit betragen kann, übermittelt die Regelungseinheit 5 ein Signal an die Lüftungselemente 4, 4' der Fenster 3, 3', durch das der Lüftungsvorgang abgebrochen oder abgeschwächt wird.

CO₂-Höchstgehalte, untere CO₂-Schwellenwerte, Höchstwerte der relativen Innenluftfeuchtigkeit und untere Schwellenwerte der relativen Innenluftfeuchtigkeit sind ebenfalls in der Regelungseinheit 5 festgelegt und können durch den Benutzer in der Regelungseinheit 5 manuell eingegeben werden. Beim Einbau des Lüftungssystems sind für diese Werte vorzugsweise Grundeinstellungen in der Regelungseinheit 5 vorgesehen. Eine derartige Steuerung der Luft über die Luftfeuchtigkeit im Raum 1 ist vor allem in Nassräumen wie Badezimmern, Toiletten oder Waschräumen bevorzugt. Dabei kann die Steuerung des Lüftungssystems über die Luftfeuchtigkeiten eine höhere Priorisierung gegenüber den Steuerungen auf Basis der Temperaturmessungen und der gemessenen CO₂-Gehalte besitzen. Ebenso können sowohl die Steuerung auf Basis der gemessenen Temperaturen als auch der gemessenen CO₂-Gehalte eine höhere Priorisierung besitzen als die Lüftungssteuerung auf Basis der Innenluftfeuchtigkeit.

Darüber hinaus ist es in dem erfindungsgemäßen Verfahren bevorzugt, dass in der Nähe mindestens eines Lüftungselements 4, 4' der jeweiligen Fenster 3, 3' ein Sensor zur Messung der absoluten Luftfeuchtigkeit der Außenluft vorhanden ist. Dieser Sensor steht wiederum in Kommunikationsverbindung zu den zugeordneten Lüftungselementen 4, 4'. Gemäß der vorliegenden Erfindung ist es bevorzugt, dass der Sensor zur Messung der absoluten Luftfeuchtigkeit der Außenluft in die jeweiligen Lüftungselemente 4, 4' integriert ist. Jedes der Lüftungselemente 4, 4' der Fenster 3, 3' kann dabei über einen entsprechenden Sensor zur Messung der absoluten Außenluftfeuchtigkeit verfügen. Es ist aber auch ausreichend, wenn jedes der Fenster 3, 3' über einen Sensor zur Messung der absoluten Außenluftfeuchtigkeit verfügt. Wird durch einen der Sensoren zur Messung der absoluten Außenluftfeuchtigkeit ein Wert der absoluten Außenluftfeuchtigkeit gemessen, durch den die relative Feuchtigkeit der Innenluft des Raums 1 nicht abgesenkt werden kann, geht ein entsprechendes Signal an die Regelungseinheit 5. Die Regelungseinheit 5 übermittelt dann ein Signal an die Lüftungselemente 4, 4' des jeweiligen Fensters 3, 3', in dessen Blendrahmen der Sensor zur Messung der absoluten Außenluftfeuchtigkeit aufgenommen ist, den Betrieb des bzw. der betreffenden Radiallüfter einzustellen.

Darüber hinaus kann es in dem erfindungsgemäßen Verfahren vorgesehen sein, dass die Lüftungselemente 4, 4' selbst eine Überwachung ihrer Funktion übernehmen. Diese Überwachungsfunktion der Lüftungselemente 4, 4' kann dabei Fehlfunktionen des jeweiligen Lüftungselements 4, 4' durch Filterverstopfung, ungünstige Druckverhältnisse zwischen Luft im Raum 1 und außerhalb des Raums 1, Fehlfunktionen der Lüftungselemente 4, 4' und dergleichen feststellen. Die jeweiligen Lüftungselemente 4, 4' der Fenster 3, 3' erhalten durch die Regelungseinrichtung 5 ein Signal, mit welcher Leistung der Radiallüfter des Lüftungselements 4, 4' den Lüftungsvorgang vorzunehmen hat. Daraus resultiert eine Soll-Drehzahl des Lüfterrads des Radiallüfters. Über einen in den Radiallüfter eingebauten Drehzahlmesser des Lüfterrades, der mit der Leiterplatte des jeweiligen Lüftungselements 4, 4' in Kommunikationsverbindung steht, ermittelt der Mikroprozessor, ob der Radiallüfter mit der durch die Regelungseinheit 5 vorgegebenen Drehzahl arbeitet. Die Regelungseinheit 5 übermittelt dann ein Signal zu einem entsprechend geänderten Betrieb des jeweiligen Lüftungselements 4, 4' an dieses Lüftungselement 4, 4'. Alternativ dazu kann der Mikroprozessor selbst dem Radiallüfter des jeweiligen Lüftungselements 4, 4' einen entsprechend geänderten Lüftungsbetrieb des Radiallüfters vorgeben. Dies gewährleistet einen Betrieb des Radiallüfters mit konstanter Drehgeschwindigkeit. Dadurch werden übermäßig hohe Drehzahlen der Radiallüfter beispielsweise beim Schließen der Luftzufuhr verhindert. Ist aber die Luftzufuhr geschlossen, was beispielsweise durch einen verstopften Filter im Lüftungskanal der Fall sein kann, wird eine erheblich geringere Leistung am Radiallüfter benötigt. Dies kann durch das jeweilige Lüftungselement 4, 4' selbst festgestellt werden und an die Regelungseinheit 5 übermittelt werden, an der eine entsprechende Anzeige für den Benutzer angezeigt werden kann. Darüber hinaus kann der Betrieb des betreffenden Lüftungselements 4, 4' beendet werden, wobei ein entsprechendes Signal entweder von der Regelungseinheit 5 oder vom Mikroprozessor des jeweiligen Lüftungselements 4, 4' übermittelt werden kann.

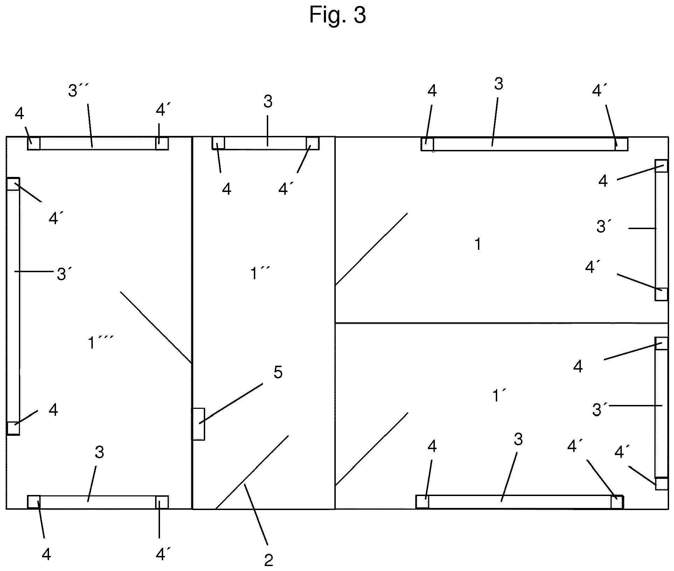

Fig. 2 und Fig. 3 zeigen jeweils eine Wohnetage mit vier Räumen 1, 1', 1", 1"', deren Lüftungssystem jeweils durch eine Ausführungsform des erfindungsgemäßen Verfahrens gesteuert wird. Im Folgenden sollen Komponenten und einzelne Vorgehensweisen, die denjenigen entsprechen, die bereits unter Bezugnahme auf Fig. 1 beschrieben wurden, nicht noch einmal im Detail diskutiert werden. Die entsprechenden Ausführungen zu Fig. 1 gelten auch in Bezug auf Fig. 2 und Fig. 3 entsprechend. Gleiche Komponenten tragen dabei jeweils dieselben Bezugszeichen.

Fig. 2 zeigt eine schematische Querschnittdarstellung einer Gebäudeebene mit vier Räumen 1, 1', 1", 1"'. Die Räume 1 und 1' weisen jeweils zwei Fenster 3, 3' mit jeweils zwei Lüftungselementen 4, 4' auf, während der Raum 1" lediglich ein Fenster 3 mit zwei Lüftungselementen 4, 4' aufweist und der Raum 1"' hingegen drei Fenster 3, 3', 3'" mit jeweils zwei Lüftungselementen 4, 4' aufweist. In jedem der Räume 1, 1', 1", 1"' ist jeweils eine Regelungseinheit 5 angeordnet. Dabei ist es bevorzugt, dass die Regelungseinheiten 5 miteinander in Kommunikationsverbindung stehen. Dies kann beispielsweise über eine Bus-Verbindung oder über eine Funkverbindung erfolgen. In den jeweiligen Regelungseinheiten 5 der einzelnen Räume 1, 1', 1", 1'" sind Programme vorgesehen, die für bestimmte Raumtypen wie beispielsweise "normales Zimmer" (beispielsweise Wohnzimmer, Arbeitszimmer, Flur und dergleichen), "Schlafzimmer" (Elternschlafzimmer, Kinderzimmer und dergleichen), "Küche" und "Nassraum" (beispielsweise Bad, Toilette, Waschküche und dergleichen) kategorisiert sind. Je nach Raumtyp erfolgt eine abgeänderte Steuerung der Lüftungselemente 4, 4' in den jeweiligen Räumen 1, 1', 1", 1"'. Im in Fig. 2 gezeigten Beispiel sind die Räume 1 und 1" dem Raumtyp "normales Zimmer", während Raum 1' dem Raumtyp "Nassraum" und Raum 1"'dem Raumtyp "Schlafzimmer" zugeordnet sind. Bei dem Raumtyp "Schlafzimmer" können beispielsweise Geräuschemissionen während der Nachtstunden vermieden werden, das heißt, die diesen Räumen zugeordneten Lüftungselemente 4, 4' werden in den Nachtstunden nicht mit der vollen Lüfterleistung betrieben. Im Gegensatz dazu können dem Programmtyp "normales Zimmer" zugewiesene Räume insbesondere während der Nacht mit hoher Lüftungsleistung gelüftet werden. Bei den dem Programmtyp "Nassraum" zugewiesenen Raumtypen ist es möglich, der Lüftung auf Basis der gemessenen Luftfeuchtigkeitswerte Priorität zu verleihen. Dadurch ist es gewährleistet, dass das erfindungsgemäße Verfahren zu einem angenehmen Raumklima in den jeweiligen Räumen beiträgt und Benutzercomfort gewährleistet.

In jedem Fenster 3, 3', 3'" der Räume 1, 1', 1", 1'" ist wiederum mindestens ein Sensor zur Messung der Außentemperatur angeordnet, so dass auf Befehl der die jeweiligen Regelungseinheiten 5 ein Belüftungsvorgang verstärkt über diejenigen Lüftungselemente 4, 4' erfolgen kann, in deren Nähe eine für die durch den Lüftungsvorgang zu erzielende Temperaturänderung in dem jeweiligen Raum günstige Außentemperatur gemessen wird. Dies gilt entsprechend sowohl zur Belüftung der einzelnen Räume 1, 1', 1", 1"' als auch zur Belüftung der durch die Räume 1, 1', 1", 1'" gebildeten Etage.

Fig. 3 zeigt schließlich eine schematische Querschnittdarstellung einer Gebäudeebene mit vier Räumen 1, 1', 1", 1"', wobei lediglich in Raum 1" eine Regelungseinheit 5 angeordnet ist, durch die sowohl die in dem Raum 1" angeordneten Lüftungselemente 4, 4' als auch die in den anderen Räumen 1, 1', 1"' angeordneten Lüftungselemente 4, 4' angesteuert werden können. Die in Bezug auf Fig. 3 dargestellten Ausführungen zu spezifischen Raumtypen als auch zur Temperaturregelung gelten für Fig. 3 entsprechend.

Die vorliegende Erfindung wurde unter Bezugnahme auf die in den Figuren gezeigte Ausführungsformen der durch das erfindungsgemäße Verfahren gesteuerten Lüftungssysteme im Detail erläutert. Es versteht sich dass die vorliegende Erfindung nicht auf die dargestellten Ausführungsformen beschränkt ist.

## Patentansprüche

1. Verfahren zur Steuerung eines Lüftungssystems mindestens eines Raums (1, 1', 1", 1"'), wobei das Lüftungssystem zwei oder mehr Lüftungselemente (4, 4'), mindestens eine Regelungseinheit (5), mindestens einen Sensor zur Messung der Innentemperatur sowie Sensoren zur Messung der Außentemperatur umfasst, wobei die Lüftungselemente (4, 4') und die Sensoren mit der Regelungseinheit (5) in Kommunikation stehen, jedem Lüftungselement (4, 4') jeweils ein Sensor zur Messung der Außentemperatur zugeordnet ist und der dem jeweiligen Lüftungselement (4, 4') zugeordnete Sensor zur Messung der Außentemperatur diejenige Außentemperatur misst, die jeweils in der Nähe des zugeordneten Lüftungselements (4, 4') vorherrscht, **dadurch gekennzeichnet, dass** die Regelungseinheit (5) in Abhängigkeit von den gemessenen Außentemperaturen denjenigen Lüftungselementen (4, 4'), deren zugeordnete Sensoren zur Messung der Außentemperatur eine für die durch den Lüftungsvorgang zu erzielende Temperaturänderung in dem mindestens einen Raum (1, 1', 1", 1"') günstige Außentemperatur messen, einen Betrieb mit erhöhter Leistung gegenüber den anderen Lüftungselementen vorgibt.

2. Verfahren gemäß Anspruch 1, **dadurch gekennzeichnet, dass** die Regelungseinheit (5) eine Datumsfunktion aufweist und eine Entscheidung, welchem Lüftungselement bzw. welchen Lüftungselementen (4, 4') durch die Regelungseinheit (5) eine erhöhte Leistung vorgegeben wird, in Abhängigkeit von der gerade herrschenden Jahreszeit erfolgt.

3. Verfahren gemäß Anspruch 1 oder Anspruch 2, **dadurch gekennzeichnet, dass** das Lüftungssystem weiter mindestens einen mit der Regelungseinheit (4, 4') in Kommunikation stehenden Sensor zur Messung des CO₂-Gehaltes umfasst und die Regelungseinheit (5) bei Überschreiten eines in der Regelungseinheit (5) festgelegten CO₂-Höchstgehalts den Lüftungselementen (4, 4') einen Lüftungsbetrieb vorgibt, bis ein in der Regelungseinheit (5) festgelegter unterer CO₂-Schwellenwert unterschritten ist.

4. Verfahren gemäß einem der Ansprüche 1 bis 3, **dadurch gekennzeichnet, dass** das Lüftungssystem weiter mindestens einen mit der Regelungseinheit (5) in Kommunikation stehenden Sensor zur Messung der relativen Innenluftfeuchtigkeit umfasst und die Regelungseinheit (5) bei Überschreiten eines in der Regelungseinheit (5) festgelegten Maximalwerts der relativen Innenluftfeuchtigkeit den Lüftungselementen (4, 4') einen Lüftungsbetrieb vorgibt, bis ein in der Regelungseinheit (5) festgelegter unterer Schwellenwert der relativen Innenluftfeuchtigkeit unterschritten ist.

5. Verfahren gemäß Anspruch 4, **dadurch gekennzeichnet, dass** das Lüftungssystem weiter mindestens einen mit der Regelungseinheit (5) in Kommunikation stehenden Sensor zur Messung der absoluten Außenluftfeuchtigkeit umfasst und die Regelungseinheit (5) einen Betrieb der Lüftungselemente (4, 4') verhindert, wenn die absolute Außenluftfeuchtigkeit einen Wert aufweist, der kein Absenken der relativen Innenluftfeuchtigkeit erlaubt.

6. Verfahren gemäß einem der Ansprüche 1 bis 5, **dadurch gekennzeichnet, dass** die Lüftungselemente (4, 4') eine Überwachung ihrer Funktion vornehmen, bei Auftreten einer Fehlfunktion des Lüftungselements (4, 4') das Ergebnis der Überwachung an die Regelungseinheit (5) übermittelt wird und die Regelungseinheit (5) dem entsprechenden Lüftungselement (4, 4') ein Signal zur Anpassung des Betriebs dieses Lüftungselements (4, 4') übermittelt.

7. Verfahren gemäß einem der Ansprüche 1 bis 6, **dadurch gekennzeichnet, dass** das Verfahren ein Lüftungssystem für mehrere Räume (1, 1', 1", 1"') steuert, denen jeweils mindestens ein Lüftungselement (4, 4') zugeordnet ist, wobei die Regelungseinheit (5) dem dem jeweiligen Raum (1, 1', 1", 1"') zugeordneten Lüftungselement/den dem jeweiligen Raum (1, 1', 1", 1"') zugeordneten Lüftungselementen (4, 4') ein für den jeweiligen Raum (1, 1', 1", 1"') spezifisches Lüftungsverhalten vorgibt.

8. Verfahren gemäß einem der Ansprüche 1 bis 6, **dadurch gekennzeichnet, dass** das Verfahren ein Lüftungssystem für mehrere Räume (1, 1', 1", 1"') steuert, denen jeweils eine Regelungseinheit (5) und mindestens ein Lüftungselement (4, 4') zugeordnet ist, wobei die Regelungseinheiten (5) der einzelnen Räume (1, 1', 1", 1"') miteinander in Kommunikation stehen und eine durch den Benutzer an einer Regelungseinheit (5) vorgenommene Einstellungsänderung von dieser Regelungseinheit (5) an die anderen Regelungseinheiten (5) übermittelt wird, die dem ihnen zugeordneten Lüftungselement/den ihnen zugeordneten Lüftungselementen (4, 4') ein der entsprechend der vorgenommene Einstellungsänderung geändertes Lüftungsverhalten vorgeben.

9. Verfahren gemäß einem der Ansprüche 1 bis 8, **dadurch gekennzeichnet, dass** die Lüftungselemente (4, 4') und/oder die Sensoren zur Messung der Außentemperatur und/oder die Sensoren zur Messung der Außenluftfeuchtigkeit jeweils in einem oder mehreren Fensterrahmen, insbesondere in einem oder mehreren Blendrahmen angeordnet sind.

10. Lüftungssystems mindestens eines Raums (1, 1', 1", 1"'), **dadurch gekennzeichnet, dass** es zur Durchführung eines Verfahrens nach einem der Ansprüche 1 bis 9 ausgelegt ist.

## Claims

1. A method for controlling a ventilation system of at least one room (1, 1', 1", 1"'), wherein the ventilation system comprises two or more ventilation elements (4, 4'), at least one control unit (5), at least one sensor for measuring the indoor temperature and sensors for measuring the outdoor temperature, wherein the ventilation elements (4, 4') and the sensors are in communication with the control unit (5), each ventilation element (4, 4') has assigned to it a sensor for measuring the outdoor temperature and the sensor for measuring the outdoor temperature assigned to the respective ventilation element (4, 4') measures the outdoor temperature prevailing in the vicinity of the assigned ventilation element (4, 4') in each case, **characterised in that** the control unit (5), as a function of the measured outdoor temperatures, sets those ventilation elements (4, 4') of which the assigned sensors for measuring the outdoor temperature are measuring an outdoor temperature which is favourable for the temperature change to be achieved by the ventilation process in the at least one room (1, 1', 1", 1"') to operate with increased power compared with the other ventilation elements.

2. The method according to claim 1, **characterised in that** the control unit (5) has a date function and a decision on the ventilation element or elements (4, 4') which are given increased power by the control unit (5) is made as a function of the current time of year.

3. The method according to claim 1 or claim 2, **characterised in that** the ventilation system further comprises at least one sensor for measuring the CO₂ content, said sensor being in communication with the control unit (4, 4'), and when a maximum CO₂ content specified in the control unit (5) is exceeded, the control unit (5) sets the ventilation elements (4, 4') to perform a ventilation operation until the CO₂ level falls below a lower threshold value specified in the control unit (5).

4. The method according to one of claims 1 to 3, **characterised in that** the ventilation system further comprises at least one sensor for measuring the indoor relative humidity, said sensor being in communication with the control unit (5), and when a maximum value of the indoor relative humidity specified in the control unit (5) is exceeded, the control unit (5) sets the ventilation elements (4, 4') to perform a ventilation operation until the indoor relative humidity falls below a lower threshold value specified in the control unit (5).

5. The method according to claim 4, **characterised in that** the ventilation system further comprises at least one sensor for measuring the outdoor absolute humidity, said sensor being in communication with the control unit (5), and the control unit (5) prevents the ventilation elements (4, 4') from operating when the outdoor absolute humidity has a value which does not allow the indoor relative humidity to be reduced.

6. The method according to one of claims 1 to 5, **characterised in that** the ventilation elements (4, 4') perform a monitoring of their function, when a malfunction of the ventilation element (4, 4') occurs the result of the monitoring is transmitted to the control unit (5) and the control unit (5) transmits a signal to the appropriate ventilation element (4, 4') to adjust the operation of this ventilation element (4, 4').

7. The method according to one of claims 1 to 6, **characterised in that** the method controls a ventilation system for multiple rooms (1, 1', 1", 1"'), each of which has at least one ventilation element (4, 4') assigned to it, wherein the control unit (5) sets a ventilation behaviour for the ventilation element(s) (4, 4') assigned to the respective room (1, 1', 1", 1"'), said behaviour being specific to the respective room (1, 1', 1", 1"').

8. The method according to one of claims 1 to 6, **characterised in that** the method controls a ventilation system for multiple rooms (1, 1', 1", 1"'), to each of which a control unit (5) and at least one ventilation element (4, 4') is assigned, wherein the control units (5) of the individual rooms (1, 1', 1", 1"') are in communication with each other and a setting change performed by the user at a control unit (5) is transmitted by this control unit (5) to the other control units (5), which set the ventilation behaviour of the ventilation element(s) (4, 4') assigned thereto to change in accordance with the setting change performed.

9. The method according to one of claims 1 to 8, **characterised in that** the ventilation elements (4, 4') and/or the sensors for measuring the outdoor temperature and/or the sensors for measuring the outdoor humidity are each disposed in one or more window frames, in particular in one or more outer frames.

10. Ventilation system of at least one room (1, 1', 1", 1"'), **characterised in that** it is configured to perform a method according to one of claims 1 to 9.

## Revendications

1. Procédé de commande d'un système de ventilation d'au moins une pièce (1, 1', 1", 1"'), le système de ventilation comportant deux éléments de ventilation (4, 4') ou plus, au moins une unité de régulation (5), au moins un capteur de mesure de la température intérieure ainsi que des capteurs de mesure de la température extérieure, lesdits éléments de ventilation (4, 4') et les capteurs communiquant avec l'unité de régulation (5), un capteur de mesure de la température extérieure étant affecté à chaque élément de ventilation (4, 4') et le capteur de mesure de la température extérieure affecté à l'élément de ventilation (4, 4') respectif mesurant la température extérieure qui règne respectivement à proximité de l'élément de ventilation (4, 4') affecté, **caractérisé en ce que** l'unité de régulation (5), suivant les températures extérieures mesurées, dicte aux éléments de ventilation (4, 4') dont les capteurs affectés pour mesurer la température extérieure mesurent une température extérieure favorable pour le changement de température à réaliser par le biais du processus de ventilation dans au moins une pièce (1, 1', 1", 1"), un fonctionnement avec une puissance accrue par rapport aux autres éléments de ventilation.

2. Procédé selon la revendication 1, **caractérisé en ce que** l'unité de régulation (5) est dotée d'une fonction indiquant la date et **en ce qu'**une décision intervient concernant l'élément de ventilation voire les éléments de ventilation (4, 4') auquel voire auxquels une puissance accrue est dictée par l'unité de régulation (5), en fonction de la saison en cours.

3. Procédé selon la revendication 1 ou la revendication 2, **caractérisé en ce que** le système de ventilation comporte par ailleurs au moins un capteur de mesure de la teneur en CO2 qui communique avec l'unité de régulation (4, 4') et **en ce que** l'unité de régulation (5) dicte aux éléments de ventilation (4, 4'), dès le dépassement par le haut d'une teneur maximum en CO₂ fixée dans l'unité de régulation (5), une mise en marche de la ventilation jusqu'au passage en-dessous d'une valeur seuil de CO₂ inférieure fixée dans l'unité de régulation (5).

4. Procédé selon l'une quelconque des revendications 1 à 3, **caractérisé en ce que** le système de ventilation comporte par ailleurs au moins un capteur de mesure de l'humidité relative de l'air intérieur qui communique avec l'unité de régulation (5) et **en ce que** l'unité de régulation (5) dicte aux éléments de ventilation (4, 4'), dès le dépassement par le haut d'une valeur maximale de l'humidité relative de l'air intérieur fixée dans l'unité de régulation (5), une mise en marche de la ventilation jusqu'au passage en-dessous d'une valeur seuil inférieure de l'humidité relative de l'air intérieur fixée dans l'unité de régulation (5).

5. Procédé selon la revendication 4, **caractérisé en ce que** le système de ventilation comporte par ailleurs au moins un capteur de mesure de l'humidité absolue de l'air extérieur qui communique avec l'unité de régulation (5) et **en ce que** l'unité de régulation (5) empêche un fonctionnement des éléments de ventilation (4, 4') lorsque l'humidité absolue de l'air extérieur présente une valeur qui n'autorise pas une baisse de l'humidité relative de l'air intérieur.

6. Procédé selon l'une quelconque des revendications 1 à 5, **caractérisé en ce que** les éléments de ventilation (4, 4') assurent une surveillance de leur fonction, **en ce que**, en cas de dysfonctionnement de l'élément de ventilation (4, 4'), le résultat de la surveillance est transmis à l'unité de régulation (5) et **en ce que** l'unité de régulation (5) envoie à l'élément de ventilation (4, 4') correspondant un signal pour ajuster le mode de fonctionnement de cet élément de ventilation (4, 4').

7. Procédé selon l'une quelconque des revendications 1 à 6, **caractérisé en ce que** le procédé régit un système de ventilation pour plusieurs pièces (1, 1', 1", 1"') auxquelles un élément de ventilation (4, 4') est respectivement affecté, l'unité de régulation (5) dictant à l'élément de ventilation affecté à la pièce respective (1, 1', 1", 1"')/aux éléments de ventilation (4, 4') affectés à la pièce respective (1, 1', 1", 1"') un comportement spécifique de ventilation pour la pièce (1, 1', 1", 1"') respective.

8. Procédé selon l'une quelconque des revendications 1 à 6, **caractérisé en ce que** le procédé régit un système de ventilation pour plusieurs pièces (1, 1', 1", 1"') auxquelles sont affectés respectivement une unité de régulation (5) et au moins un élément de ventilation (4, 4'), les unités de régulation (5) de chaque pièce (1, 1', 1", 1"') communiquant entre elles et une modification du réglage opérée par l'utilisateur sur une unité de régulation (5) étant transmise depuis cette unité de régulation (5) aux autres unités de régulation (5), qui dictent à l'élément de ventilation/aux éléments de ventilation qui leur est ou sont affectés un comportement de ventilation modifié correspondant à la modification de réglage pratiquée.

9. Procédé selon l'une quelconque des revendications 1 à 8, **caractérisé en ce que** les éléments de ventilation (4, 4') et/ou les capteurs de mesure de la température extérieure et/ou les capteurs de mesure de l'humidité de l'air extérieur sont respectivement disposés dans un ou plusieurs cadres de fenêtre, en particulier dans un ou plusieurs dormants.

10. Système de ventilation d'au moins une pièce (1, 1', 1", 1"'), **caractérisé en ce qu'**il est conçu pour exécuter un procédé selon l'une des revendications 1 à 9.
